# EUROPEAN PATENT SPECIFICATION

(11) **EP 1 556 964 B1**
(45) Date of publication and mention of the grant of the patent: **02.05.2007**
(21) Application number: 03750950.2
(22) Date of filing: 24.09.2003
(51) Int. Cl.: H04B 3/54

(54) **COMMUNICATION METHODS AND APPARATUS**
KOMMUNIKATIONSVERFAHREN UND -VORRICHTING
PROCEDES ET APPAREIL DE COMMUNICATION

(30) Priority: 02.10.2002 GB 0222828; 04.11.2002 GB 0225653
(43) Date of publication of application: 27.07.2005
(73) Proprietor: ARTIMI LTD, Cambridge CB2 1LQ (GB)
(72) Inventor: Lang, Jack Arnold, Artimi Ltd, Cambridge, Cambridgeshire CB2 1LQ (GB)
(74) Representative: Martin, Philip John
(86) International application number: PCT/GB2003/004085
(87) International publication number: WO 2004/032363

(56) References cited:
- WO-A-01/22380
- WO-A-01/76086
- WO-A-02/23128
- US-A- 5 901 172
- US-A- 6 026 125
- US-A- 6 151 480
- US-A- 2002 019 624
- US-A1- 2003 100 288
- US-B1- 6 492 897

## Description

This invention generally relates to ultra wideband (UWB) communication, and in particular to methods and apparatus for enabling such communication.

Techniques for UWB communication developed from radar and other military applications, and pioneering work was carried out by Dr G.F. Ross, as described in US3728632. Ultra-wideband communications systems employ very short pulses of electromagnetic radiation (impulses) with short rise and fall times, resulting in a spectrum with a very wide bandwidth. Some systems employ direct excitation of an antenna with such a pulse which then radiates with its characteristic impulse or step response (depending upon the excitation). Such systems are referred to as "carrier free" since the resulting rf emission lacks any well-defined carrier frequency. However other UWB systems radiate one or a few cycles of a high frequency carrier and thus it is possible to define a meaningful centre frequency and/or phase despite the large signal bandwidth. The US Federal Communications Commission (FCC) defines UWB as a -10dB bandwidth of at least 25% of a centre (or average) frequency or a bandwidth of at least 1.5GHz; the US DARPA definition is similar but refers to a -20dB bandwidth. Such formal definitions are useful and clearly differentiates UWB systems from conventional narrow and wideband systems but the techniques described in this specification are not limited to systems falling within this precise definition and may be employed with similar systems employing very short pulses of electromagnetic radiation.

UWB communications systems have a number of advantages over conventional systems. Broadly speaking, the very large bandwidth facilitates very high data rate communications and since pulses of radiation are employed the average transmit power (and also power consumption) may be kept low even though the power in each pulse may be relatively large. Also, since the power in each pulse is spread over a large bandwidth the power per unit frequency may be very low indeed, allowing UWB systems to coexist with other spectrum users and, in military applications, providing a low probability of intercept. The short pulses also make UWB communications systems relatively unsusceptible to multipath effects since multiple reflections can in general be resolved. Finally UWB systems lend themselves to a substantially all-digital implementation, with consequent cost savings and other advantages.

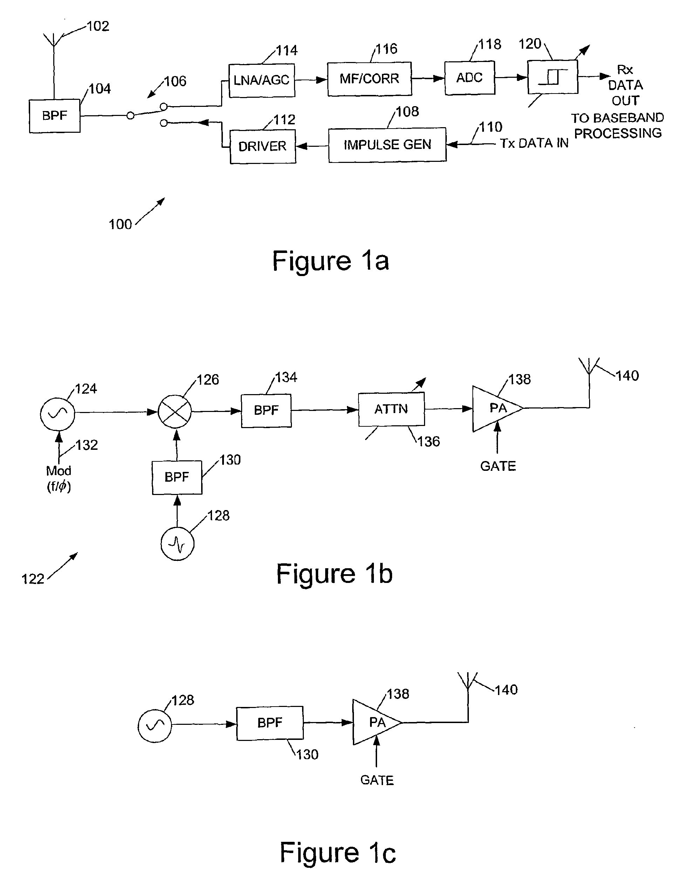

Figure 1a shows a typical UWB transceiver 100. This comprises an transmit/receive antenna 102 with a characteristic impulse response indicated by bandpass filter (BPF) 104 (although in some instances a bandpass filter may be explicitly included), couples to a transmit/receive switch 106.

The transmit chain comprises an impulse generator 108 modulatable by a baseband transmit data input 110, and an antenna driver 112. The driver may be omitted since only a small output voltage swing is generally required. One of a number of modulation techniques may be employed, typically either OOK (on-off keying ie. transmitting or not transmitting a pulse), M-ary amplitude shift keying (pulse amplitude modulation), or PPM (pulse position modulation ie. dithering the pulse position). Typically the transmitted pulse has a duration of <1ns and may have a bandwidth of the order of gigahertz.

The receive chain typically comprises a low noise amplifier (LNA) and automatic gain control (AGC) stage 114 followed by a correlator or matched filter (MF) 116, matched to the received pulse shape so that it outputs an impulse when presented with rf energy having the correct (matching) pulse shape. The output of MF 116 is generally digitised by an analogue-to-digital convertor (ADC) 118 and then presented to a (digital or software-based) variable gain threshold circuit 120, the output of which comprises the received data. The skilled person will understand that forward error correction (FEC) such as block error coding and other baseband processing may also be employed, but such techniques are well-known and conventional and hence these is omitted for clarity.

Figure 1b shows one example of a carrier-based UWB transmitter 122, as described in more detail in US 6,026,125. This form of transmitter allows the UWB transmission centre frequency and bandwidth to be controlled and, because it is carrier-based, allows the use of frequency and phase as well as amplitude and position modulation. Thus, for example, QAM (quadrature amplitude modulation) or M-ary PSK (phase shift keying) may be employed.

Referring to Figure 1b, an oscillator 124 generates a high frequency carrier which is gated by a mixer 126 which, in effect, acts as a high speed switch. A second input to the mixer is provided by an impulse generator 128, filtered by an (optional) bandpass filter 130. The amplitude of the filtered impulse determines the time for which the mixer diodes are forward biased and hence the effective pulse width and bandwidth of the UWB signal at the output of the mixer. The bandwidth of the UWB signal is similarly also determined by the bandwidth of filter 130. The centre frequency and instantaneous phase of the UWB signal is determined by oscillator 124, and may be modulated by a data input 132. An example of a transmitter with a centre frequency of 1.5GHz and a bandwidth of 400MHz is described in US 6,026,125. Pulse to pulse coherency can be achieved by phase locking the impulse generator to the oscillator.

The output of mixer 126 is processed by a bandpass filter 134 to reject out-of-band frequencies and undesirable mixer products, optionally attenuated by a digitally controlled rf attenuator 136 to allow additional amplitude modulation, and then passed to a wideband power amplifier 138 such as a MMIC (monolithic microwave integrated circuit), and transmit antenna 140. The power amplifier may be gated on and off in synchrony with the impulses from generator 128, as described in US' 125, to reduce power consumption.

Figure 1c shows a similar transmitter to that of Figure 1b, in which like elements have like reference numerals. The transmitter of Figure 1c is, broadly speaking, a special case of the transmitter of Figure 1b in which the oscillator frequency has been set to zero. The output of oscillator 124 of Figure 1b is effectively a dc level which serves to keep mixer 126 always on, so these elements are omitted (and the impulse generator or its output is modulated).

Figure 1d shows an alternative carrier-based UWB transmitter 142, also described in US6,026,125. Again like elements to those of Figure 1b are shown by like reference numerals.

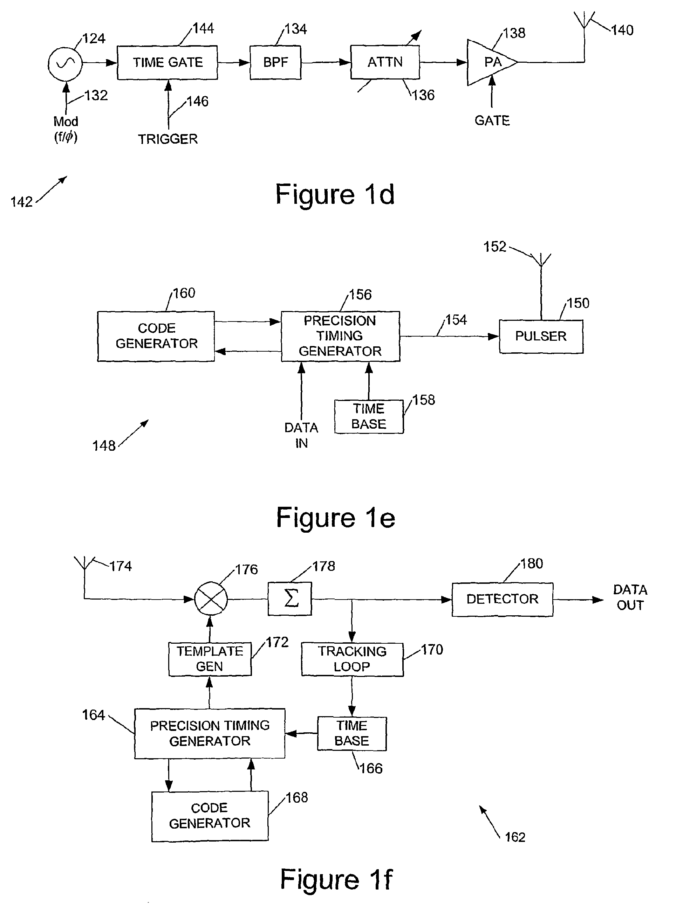

In the arrangement of Figure 1d a time gating circuit 144 gates the output of oscillator 124 under control of a timing signal 146. The pulse width of this timing signal determines the instantaneous UWB signal bandwidth. Thus the transmitted signal UWB bandwidth may be adjusted by adjusting the width of this pulse.

Ultra-wideband receivers suitable for use with the UWB transmitters of Figures 1b to 1d are described in US 5,901,172. These receivers use tunnel diode-based detectors to enable single pulse detection at high speeds,(several megabits per second) with reduced vulnerability to in-band interference. Broadly speaking a tunnel diode is switched between active and inactive modes, charge stored in the diode being discharged during its inactive mode. The tunnel diode acts, in effect, as a time-gated matched filter, and the correlation operation is synchronised to the incoming pulses.

Figure 1e shows another example of a known UWB transmitter 148, as described for example in US 6,304,623 . In Figure 1e a pulser 150 generates an rf pulse for transmission by antenna 152 under control of a timing signal 154 provided by a precision timing generator 156, itself controlled by a stable timebase 158. A code generator 160 receives a reference clock from the timing generator and provides pseudo-random time offset commands to the timing generator for dithering the transmitter pulse positions. This has the effect of spreading and flattening the comb-like spectrum which would otherwise be produced by regular, narrow pulses (in some systems amplitude modulation may be employed for a similar effect).

Figure 1f shows a corresponding receiver 162, also described in US'623. This uses a similar timing generator 164, timebase 166 and code generator 168 (generating the same pseudo-random sequence), but the timebase 166 is locked to the received signal by a tracking loop filter 170. The timing signal output of timing generator 164 drives a template generator 172 which outputs a template signal matching the transmitted UWB signal received by a receive antenna 174. A correlator/sampler 176 and accumulator 178 samples and correlates the received signal with the template, integrating over an aperture time of the correlator to produce an output which at the end of an integration cycle is compared with a reference by a detector 180 to determine whether a one or a zero has been received.

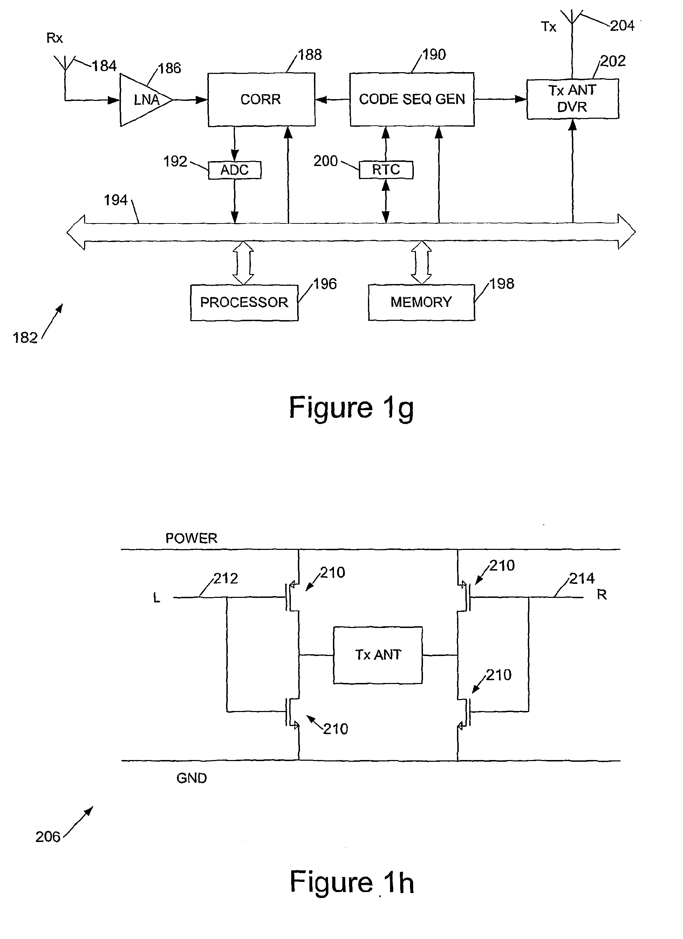

Figure 1g shows a known UWB transceiver 182 employing spread spectrum techniques and thus facilitating, for example, the co-existence of UWB communications systems and hence the unplanned deployment of UWB networks in domestic dwellings. The transceiver of Figure 1g is described in more detail in US 6,400,754.

In Figure 1g a receive antenna 184 and low noise amplifier 186 provide one input to a time-integrating correlator 188. A second input to the correlator is provided by a code sequence generator 190 which generates a spread spectrum-type code such as a Kasami code, that is a code with a high auto-correlation coefficient from a family of codes with no low cross-correlation coefficients. Correlator 188 multiplies the analogue input signal by the reference code and integrates over a code sequence period and in US '754 is a matched filter with a plurality of phases representing different time alignments of the input signal and reference code. The correlator output is digitised by analogue-to-digital converter 192 which provides an output to a bus 194 controlled by a processor 196 with memory 198 the code sequence generator 190 is driven by a crystal oscillator driven flock 200 a transmit antenna driver 202 receives data from bus 194 which is multiplied by a code sequence from generator 190 and transmitted from transmit antenna 204.

In operation coded sequences of impulse doublets are received and transmitted, in one embodiment each bit comprising a 1023-chip sequence of 10ns chips and thus having a duration of 10µs. This provides 30dB processing gain and reduces interference between clusters of network nodes which are not exactly synchronised to one another. Within a cluster employing the same CDMA (Code Division Multiple Access) code, Time Division Multiple Access (TDMA) is employed. The skilled person will recognise that shorter spreading sequences and/or faster clocks may be employed for higher bit rates.

The transceiver described in US '754 uses a modification of a frequency-independent current-mode shielded loop antenna (as described in US 4,506,267) comprising a flat rectangular conducting plate. This antenna is referred to as a large-current radiator (LCR) antenna and when driven by a current it radiates outwards on the surface of the plate.

Figure 1h shows a driver circuit 206 for such an LCR transmit antenna 208. The antenna is driven by an H-bridge comprising four MOSFETs 210 controlled by left (L) and right (R) control lines 212, 214. By toggling line 214 high then low whilst maintaining line 214 low an impulse doublet (that is a pair of impulses of opposite polarity) of a first polarity is transmitted, and by toggling line 212 high then low whilst holding line 214 low an impulse doublet of opposite polarity is radiated. The antenna only radiates whilst the current through it changes, and transmits a single gaussain impulse on each transition.

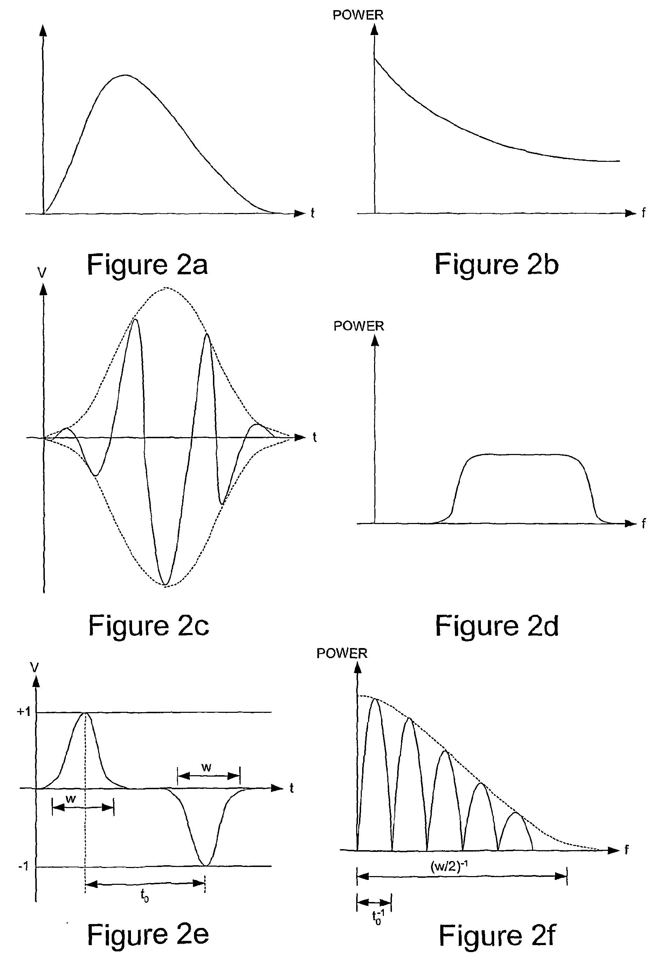

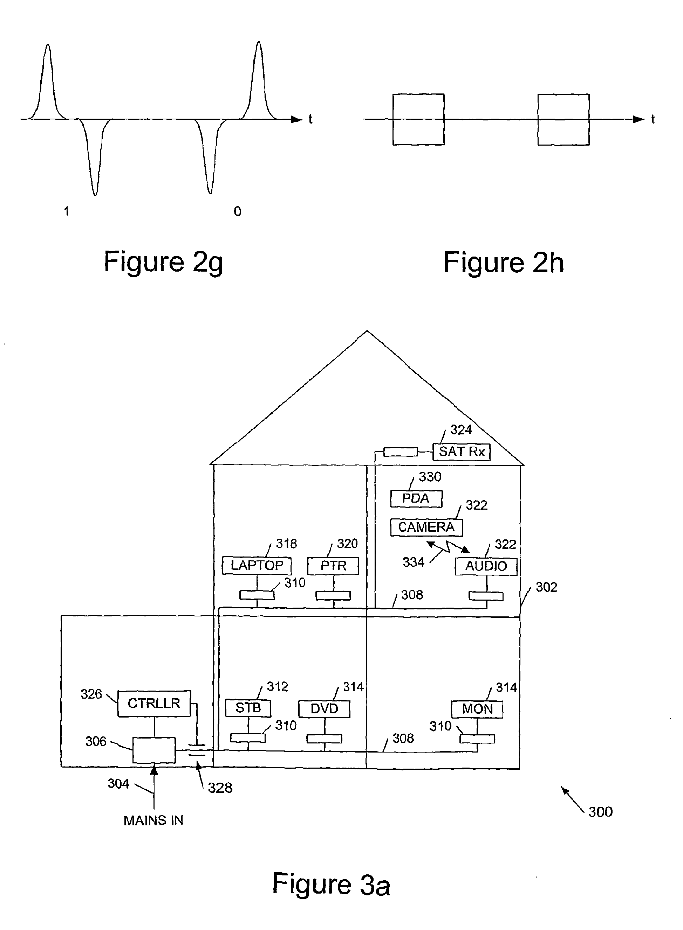

Figures 2a to 2h show examples UWB waveforms. Figure 2a shows a typical output waveform of a UWB impulse transmitter, and Figure 1b shows the power spectrum of the waveform of Figure 2a. Figure 2c shows a wave-look pulse (which when shortened becomes a monocycle) such as might be radiated from one of the transmitters of Figures 1b to 1d. Figure 2d shows the power spectrum of Figure 2c. Figure 2e shows an impulse doublet and Figure 2f the power spectrum of the doublet of Figure 2e. It can be seen that the spectrum of Figure 2f comprises a comb with a spacing (in frequency) determined by the spacing (in time) of the impulses of the doublet and an overall bandwidth determined by the width of each impulse. It can also be appreciated from Figures 2e and 2f that dithering the pulse positions will tend to reduce the nulls of the comb spectrum. Figure 2g shows examples of basis impulse doublet waveforms for a logic 0 and a logic 1. Figure 2h shows an example of a TDMA UWB transmission such as might be radiated from the transceiver of Figure 1g, in which bursts of CDMA-encoded data are separated by periods of non-transmission to allow access by other devices.

Ultrawide band potentially offers significant advantages for wireless home networking, particularly broadband networking for audio and video entertainment devices. However the wide bandwidth of UWB communications is causing concern, particularly in relation to possible interference with GPS (Global Positioning System) and Avionics Systems. For this reason although use of UWB has recently been approved by the FCC in the US, operation is only permitted at very low powers and over a restricted bandwidth (3.1 to 10.6GHz). There is therefore a need for methods and apparatus to facilitate UWB communications at low powers, particularly in the home.

Background prior-art according to asynchronous impulse radio powerline transmissions can be found in WO 01/22380.

According to a first aspect of the invention there is therefore provided a method of distributing an ultrawideband (UWB) communications signal through a building according to claim 1.

Distributing the UWB signal over the mains power supply of a building such as a domestic dwelling, for example a house or flat, and potentially enables increased UWB communication range and/or reduced power for a desired range. Furthermore because UWB signals propagate relatively poorly through building walls the method potentially enables the use of higher average UWB radiated power without a correspondingly increased risk of causing interference.

A single UWB transmitter may be employed, for example at a point of mains ingress into the building but the method preferably comprises generating a plurality of UWB signals at a plurality of UWB transmitters and coupling these onto the mains supply at different points within the building. It is further preferable that a common timing is established between at least a subset of the UWB signals, for example between all the transmitters within a room. This helps to reduce interference and facilitates multiple access techniques such as TDMA. A common or consensus clock may be established between all transmitters in the building using the mains supply as a shared communications medium or, alternatively, clusters of transmitters maybe established with a common or consensus clock and CDMA techniques used to reduce interference between such clusters. (It will be appreciated that establishing a common timing does not require that transmitters transmit impulses at the same time).

Additionally or alternatively to establishing a common timing store-and-forward nodes may be employed so that data may be transmitted in a series of hops from one transceiver to another. Multiple transmitters and receivers equipped with storage may be configured as a mesh of store-and-forward nodes.

The UWB signal may be coupled onto the mains power supply by means of a capacitative coupling to one or more of the electrical conductors, for example to a live conductor and/or to a neutral conductor. In some buildings with a wired earth connection to the mains power socket the earth wire may additionally or alternatively be used to distribute UWB signals depending upon the impedance of the earth connection to ground at the frequencies of interest. In some embodiments the UWB signal may be driven differentially onto two conductors of the mains power supply circuit and/or a single-ended or differential current drive may be employed.

One or more of the centre frequency and bandwidth of the UWB signal may be adjusted to suppress interference from other devices connected to the mains supply in the building, such as electric motors. Additionally or alternatively timing of UWB pulses may be varied to reduce the vulnerability of the UWB signals to interference. Similar techniques may be employed, if necessary, to reduce interference caused by the UWB signal or signals.

The invention further provides apparatus for distributing an ultrawideband (UWB) communications signal through a building according to claim 8.

The above-described apparatus may be incorporated in a consumer electronics device, in particular a mains powered consumer electronics device.

These and other aspects of the invention will now be further described, by way of example only, with reference to the accompanying figures in which:
Figures 1a to 1h show, respectively, a typical UWB transceiver, a first example of a known carrier-based UWB transmitter, a variant of this first example transmitter, a second example of a known carrier-based UWB transmitter, a third example of a known UWB transmitter, a receiver for the third example transmitter, a known UWB transceiver employing spread spectrum techniques, and a driver circuit for a large-current radiator antenna;
Figures 2a to 2h show examples of UWB waveforms;
Figures 3a to 3c show, respectively, a UWB home wireless network, a ring mains based UWB home network, and an alternative mains power distribution wiring configuration; and
Figures 4a to 4f show alternatives for coupling a UWB transmitter to mains wiring.

Referring now to Figure 3a, this shows a UWB home wireless network 300 employing mains power supply wiring as a transmission medium. A home 302 has an incoming mains power supply 304 coupled via a fuse box 306 to a ring or spur-based mains power distribution circuit 308 with a plurality of mains power sockets 310. One or more consumer electronics devices (CEDs) are plugged into each of the sockets, in the illustrated example these including a set top box (STB) 312, a DVD player 314, a TV or computer monitor 316, a laptop computer 318, a printer 320, an audio system 322, and a satellite receiver 324. One or more of these devices may be equipped with a UWB transmitter, receiver, or transceiver for communicating with others of the devices or with a controller 326 connected to the fuse box 306. These UWB devices are rf coupled to mains circuit 308 via power sockets 310 and, in the case of controller 326, fuse box 306. Additional coupling such as coupling 328 of controller 326 may also optionally be employed. Fuse box 306 may incorporate a UWB filter to reduce external interference and to limit egress of UWB transmissions from house 302.

Free space transmitted power falls off with distance to the power of -2, but through-wall transmissions typically fall off faster, with an exponent of between -3 and -4. Coupling the UWB transmitters of a consumer electronic device to the mains circuit facilitates UWB-based networking between the devices by providing improved propagation, for example between devices separated by a wall. For example, UWB propagation ranges of greater than 10m may be achieved in mains wiring.

The use of UWB communications particularly facilitates high bit rate data links such as audio, and particularly video data links. Devices such as personal digital assistants (PDA) 330 and camera 332 which are not directly connected to the mains circuit 308 may communicate with a mains powered and UWB-enabled device such as audio system 322, for example via a Bluetooth link 334 and thus obtain access to mains cabling-facilitated UWB transmitter and/or receiver equipment.

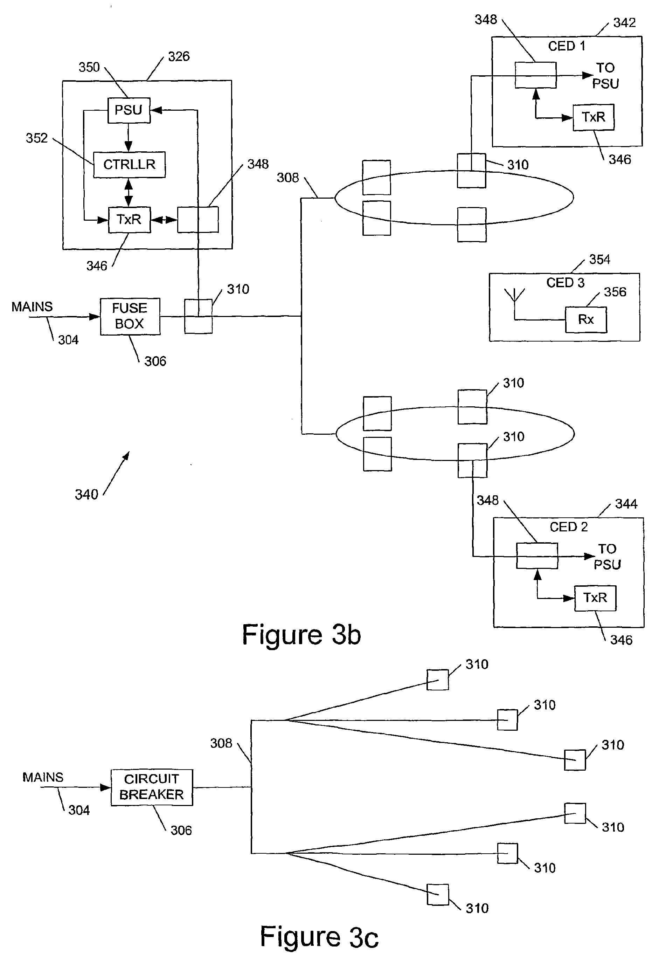

Referring now to Figure 3b, this shows an example of a ring mains based UWB home network 340, in which like elements to those of Figure 3a are indicated by like reference numerals.

In Figure 3b two mains powered consumer electronic devices 342, 344 are shown each having a mains input connected to an internal power supply unit for supplying internal DC power to elements of the device and also to a UWB transceiver 346 coupled to the mains input by coupling means 348. The controller 326 is similar, and includes the mains driven power supply 350 and a network controller 352 to, for example, to control time and/or frequency domain access to a part or all of the network for the transmitters of transceivers 346.

A battery powered consumer electronics device 354 includes a UWB receiver 356 and, optionally, a UWB transmitter (not shown). Device 354 can receive UWB signals radiated from mains power lines and, since it lacks direct access to mains wiring-facilitated UWB signal propagation, it may transmit via an intermediary such as one of devices 342, 344 or controller 326. Alternatively UWB transmissions from device 354 may couple wirelessly into the mains wiring.

Figure 3c shows an alternative mains power distribution wiring configuration to which the techniques described herein can also be applied. In Figure 3c like elements to those of Figures 3b and 3 a are indicated by like reference numerals.

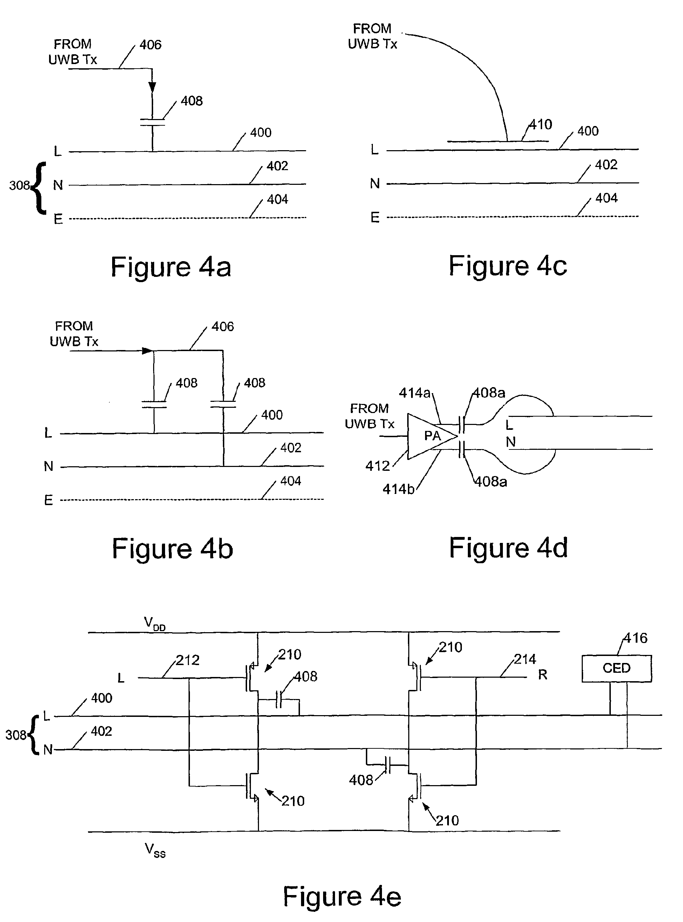

Figures 4a to 4f show alternatives for coupling a UWB transmitter to mains wiring.

Referring to Figure 4a, mains wiring generally comprises a pair of conductors 400, 402 for respective live and neutral connections and, optionally, a third conductor 404 to provide an earth connection. An output 406 from a UWB transmitter normally provided to a transmit antenna may instead be coupled to either or both of live and neutral conductors 400, 402 via a coupling capacitor 408. Figure 4b illustrate coupling to both live and neutral conductors via a pair of capacitors 408. Line 406 may, for example, comprise an output of power amplifier 138 of the transmitter of Figure 1b, 1c or 1d. Coupling capacitor 408 is chosen to have a high impedance at mains frequencies but a low impedance at the relatively high frequencies used for UWB transmissions, that is a relatively high impedance around 50Hz and a low impedance above, for example, 1GHz. A discrete component with a value of, say, 1nF may be employed but, in practice, capacitor 408 need not be a lumped element and may simply comprise the capacitance between a coupling conductor 410 and one or more of the mains power conductors, as shown in Figure 4c. Alternatively a UWB transmitter with an output amplifier 412 providing a differential voltage or current output 414a, b may be employed with twin coupling capacitors 408a, b as shown in Figure 4d. The conductors of the mains power supply act, to some extent, as a leaky transmission line, particularly where the conductors are twisted, and thus the if energy tends to propagate a long space between the conductors, albeit leaking out from around the conductors to provide a relatively increased power but localised electromagnetic field.

Figure 4e shows a further alternative arrangement for coupling a UWB transmission to a pair of mains power conductors, based upon the circuit of Figure 1h as described in US 6,400,754, which circuit is specifically hereby incorporated by reference. In Figure 4e the "H-drive" from FETs 210 is applied via coupling capacitors 408 to live and neutral mains conductors 400, 402 to provide a current drive to the mains power wiring. Current flows through capacitors 408 and mains conductors 400, 402 and also through consumer electronics device 416 (plugged into the mains supply) forming a circuit. It will be appreciated that because of the presence of coupling capacitors 408 current will only flow during transitions where one or other of control lines 212, 214 is changing state but since the LCR antenna 208, as previously described only radiates during such transitions in practice this may not be a significant limitation.

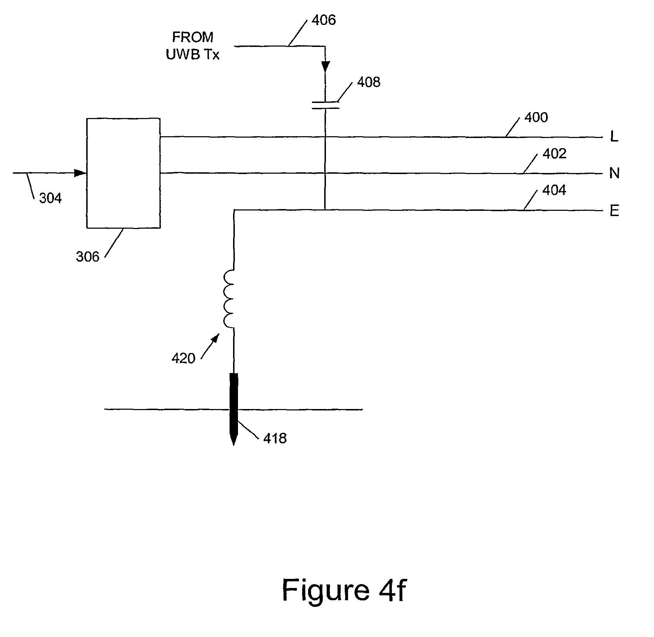

Figure 4f shows yet another alternative for coupling a UWB transmission to mains power wiring which may be employed where a wired earth circuit or connection exists. In the illustrative example of Figure 4f mains conductor 404 terminates in a ground spike 418 or other ground connection, for example a cold water pipe. To achieve a degree of isolation between a UWB transmitter connected to the mains wiring and ground an rf choke 420 maybe included in the earth circuit immediately adjacent to the actual lower ground connection 418. Where there is a plurality of such direct earth connections an rf choke may be included in series immediately adjacent each one. The rf choke should be selected to have a high impedance to transmissions at frequencies within the bandwidth of the UWB transmitter but a low impedance at lower ground frequencies. In particular mains frequencies such as 50Hz or 60Hz. In practice a few turns in a relatively stiff earth wire adjacent its connection point to a conductor leading into the ground may be sufficient.

One or more of a number of techniques may be employed to reduce the susceptibility of the UWB network to noise present on the mains power supply wiring. For example the UWB transmission frequency and/or bandwidth may be modified, optionally adaptively, for example by pulse shaping prior to transmission. For example the centre frequency/bandwidth may be adjusted to move the UWB transmission away from frequencies with high levels of interference. Additionally or alternatively impulse timing (spacing and/or duty cycle) may be adjusted, for example so that nulls in the comb frequency spectrum coincide with the peak power from interferers. Where necessary, coherent pulse combining (that is pre-detection), or even combining post-detection can be employed for additional processing gain. Related time-correlation techniques or other anti-jamming techniques such as CDMA coding of transmitted data may also be employed.

No doubt many other effective alternatives will occur to the skilled person. For example applications of the above-described techniques are not limited to domestic buildings but may also be employed in office accommodation and industrial buildings. Similarly, although the techniques have been described with reference to the single-phase supply usually found in domestic dwellings corresponding techniques may also be employed with the three-phase circuits more commonly found in industry.

In alternatives to the above described methods and apparatus the mains power cable-based UWB signal distribution may be replaced (or supplemented) by UWB signal distribution based upon an alternative building wiring system. Thus instead of (or additionally to) the one or two electrical conductors of a mains power supply, one or two conductors of a computer networking cable, such as a Cat 5 cable, or one or two conductors of a telephone cable may be employed to distribute the UWB signal. For the reasons already mentioned, the low-power ultra-wideband pulsed nature of the signal reduces the likelihood of interference to existing signals transported on these cables.

It will be understood that the invention is not limited to the described embodiments and encompasses modifications apparent to those skilled in the art lying within the scope of the claims appended hereto.

## Claims

1. A method of distributing an ultrawideband, UWB, communications signal through a building (300), the method comprising:
generating (346) a UWB signal; and
coupling (348) the UWB signal to at least one electrical conductor (400; 402; 404) of a mains power supply circuit (308) of the building to distribute the UWB signal;
the method being **characterised by**:
generating a plurality of UWB signals at a plurality of UWB transmitters (346); and
coupling said plurality of UWB signals onto said electrical conductor at a plurality of different points (310) within said building;
establishing a common timing between at least a subset of said UWB signals to reduce interference; and
varying a timing of said UWB signal to reduce the vulnerability to interference.

2. A method as claim 1 further comprising receiving said UWB signal at a plurality of points within said building.

3. A method as claimed in claim 1 or 2 and wherein said coupling comprises capacitative coupling (408).

4. A method as claimed in claim 1, 2 or 3 comprising coupling said UWB signal to two electrical conductors of said mains power supply circuit.

5. A method as claimed in claim 4 further comprising differentially driving said UWB signal onto said two conductors.

6. A method as claimed in claim 4 wherein said coupling comprises applying a current drive to said electrical conductors.

7. A method as claimed in any preceding claim wherein said coupling is performed at a central distribution point (326) of said mains power supply circuit of said building.

8. Apparatus for distributing an ultrawideband, UWB, communications signal through a building (300), the apparatus comprising:
means (346) for generating a UWB signal;
means (348) for coupling the UWB signal to at least one electrical conductor (400; 402; 404) of a mains power supply circuit (308) of the building to distribute the UWB signal; and
**characterised by**:
means for generating a plurality of UWB signals at a plurality of UWB transmitters (346);
means for coupling said plurality of UW signals onto said electrical conductor at a plurality of different points (310) within said building; and
means for establishing a common timing between at least a subset of said UWB signals to reduce interference; and
means for varying a timing of said UWB signal to reduce the vulnerability to interference.

9. A consumer electronics device incorporating the apparatus of claim 8.

10. A consumer electronics device as claimed in claim 9 wherein the consumer electronics device is mains powered.

11. A data communications network including the apparatus of claim 8.

## Patentansprüche

1. Verfahren zur Verteilung eines Ultrabreitband-(UWB-)Kommunikationssignals in einem Gebäude (300), wobei das Verfahren die folgenden Schritte umfaßt:
Erzeugen (346) eines UWB-Signals; und
Einkoppeln (348) des UWB-Signals in mindestens einen elektrischen Leiter (400; 402; 404) eines Stromversorgungsnetzes (308) des Gebäudes, um das UWB-Signal zu verteilen;
wobei das Verfahren durch die folgenden Schritte **gekennzeichnet** ist;
Erzeugen einer Vielzahl von UWB-Signalen in einer Vielzahl von UWB-Sendern (346); und
Einkoppeln der Vielzahl von UWB-Signalen in den elektrischen Leiter an einer Vielzahl von unterschiedlichen Punkten (310) innerhalb des Gebäudes;
Herstellen einer gemeinsamen Taktung zwischen mindestens einer Teilmenge der UWB-Signale, um Störungen zu verringern; und
Variieren einer Taktung des UWB-Signals, um die Anfälligkeit für Störungen zu verringern.

2. Verfahren nach Anspruch 1, ferner mit dem folgenden Schritt: Empfangen des UWB-Signals an einer Vielzahl von Punkten innerhalb des Gebäudes.

3. Verfahren nach Anspruch 1 oder 2, und wobei das Einkoppeln kapazitives Einkoppeln (408) umfaßt.

4. Verfahren nach Anspruch 1, 2 oder 3, mit dem folgenden Schritt: Einkoppeln des UWB-Signals in zwei elektrische Leiter des Stromversorgungsnetzes.

5. Verfahren nach Anspruch 4, ferner mit dem folgenden Schritt: differentielles Einsteuern des UWB-Signals in die beiden Leiter.

6. Verfahren nach Anspruch 4, wobei das Einkoppeln umfaßt: Anwenden einer Stromeinsteuerung in die elektrischen Leiter.

7. Verfahren nach einem der vorhergehenden Ansprüche, wobei das Einkoppeln an einem zentralen Verteilungspunkt (326) des Stromversorgungsnetzes des Gebäudes durchgeführt wird.

8. Vorrichtung zur Verteilung eines Ultrabreitband-(UWB-)Kommunikationssignals in einem Gebäude (300), wobei die Vorrichtung umfaßt:
Mittel (346) zum Erzeugen eines UWB-Signals; und
Mittel (348) zum Einkoppeln des UWB-Signals in mindestens einen elektrischen Leiter (400; 402; 404) eines Stromversorgungsnetzes (308) des Gebäudes, um das UWB-Signal zu verteilen; und
**gekennzeichnet ist durch**:
Mittel zum Erzeugen einer Vielzahl von UWB-Signalen in einer Vielzahl von UWB-Sendern (346);
Mittel zum Einkoppeln der Vielzahl von UWB-Signalen in den elektrischen Leiter an einer Vielzahl von unterschiedlichen Punkten (310) innerhalb des Gebäudes; und
Mittel zum Herstellen einer gemeinsamen Taktung zwischen mindestens einer Teilmenge der UWB-Signale, um Störungen zu verringern; und
Mittel zum Variieren einer Taktung des UWB-Signals, um die Anfälligkeit für Störungen zu verringern.

9. Unterhaltungselektronik-Gerät, das die Vorrichtung nach Anspruch 8 einschließt.

10. Unterhaltungselektronik-Gerät nach Anspruch 9, wobei das Unterhaltungselektronik-Gerät netzgespeist ist.

11. Datenkommunikations-Netzwerk mit der Vorrichtung nach Anspruch 8.

## Revendications

1. Procédé de distribution d'un signal de communication UWB à bande ultra-large à travers un bâtiment (300), le procédé comprenant:
la génération (346) d'un signal UWB; et
le couplage (348) du signal UWB à au moins un conducteur électrique (400; 402; 404) du circuit d'alimentation de réseau électrique (308) du bâtiment pour distribuer le signal UWB;
le procédé étant **caractérisé par**:
la génération d'une pluralité de signaux UWB sur une pluralité d'émetteurs (346); et
le couplage de ladite pluralité de signaux UWB sur ledit conducteur électrique à une pluralité de points différents (310) dans ledit bâtiment;
l'établissement d'une temporisation commune entre au moins un sous-ensemble desdits signaux UWB pour réduire l'interférence; et
la variation d'une temporisation dudit signal UWB pour réduire la vulnérabilité à l'interférence.

2. Procédé selon la revendication 1, comprenant en outre la réception dudit signal UWB à une pluralité de points dans ledit bâtiment.

3. Procédé selon la revendication 1 ou 2 et dans lequel ledit couplage comprend un couplage capacitif (408).

4. Procédé selon la revendication 1, 2 ou 3 comprenant le couplage dudit signal UWB aux deux conducteurs électriques dudit circuit d'alimentation de réseau électrique.

5. Procédé selon la revendication 4, comprenant en outre la commande différentiellement dudit signal UWB sur lesdits deux conducteurs.

6. Procédé selon la revendication 4 dans lequel ledit couplage comprend l'application d'un courant de commande auxdits conducteurs électriques.

7. Procédé selon l'une quelconque des revendications précédentes, dans lequel ledit couplage est réalisé en un point central de distribution (326) dudit circuit d'alimentation de réseau électrique dudit bâtiment.

8. Appareil pour la distribution d'un signal de communication UWB à bande ultra-large à travers un bâtiment (300), l'appareil comprenant:
un réseau (346) pour générer un signal UWB;
un réseau (348) pour coupler le signal UWB à au moins un conducteur électrique (400; 402; 404) d'un circuit d'alimentation de réseau électrique (308) du bâtiment pour distribuer le signal UWB; et
**caractérisé par**;
un moyen pour générer une pluralité de signaux UWB sur une pluralité d'émetteurs/récepteurs UWB (346);
un moyen pour coupler ladite pluralité de signaux UWB sur lesdits conducteurs électriques en une pluralité de points différents (310) dans ledit bâtiment; et
un moyen pour établir d'une temporisation commune entre au moins un sous-ensemble desdits signaux UWB pour réduire l'interférence; et
un moyen pour faire varier d'une temporisation dudit signal UWB pour réduire la vulnérabilité à l'interférence.

9. Dispositif électronique grand public incorporant l'appareil de la revendication 8.

10. Dispositif électronique grand public selon la revendication 9, dans lequel le dispositif électronique grand public est alimenté par le réseau électrique.

11. Réseau de communication de données comprenant l'appareil de la revendication 8.
